# EUROPEAN PATENT APPLICATION

(11) **EP 4 718 225 A1**
(43) Date of publication of application: **01.04.2026**
(21) Application number: 24841403.9
(22) Date of filing: 29.07.2024
(51) Int. Cl.: G06F 3/0484

(54) **METHOD AND APPARATUS FOR INTERACTION, DEVICE, AND STORAGE MEDIUM**

(71) Applicant: Beijing Youzhuju Network Technology Co. Ltd, Beijing 101299 (CN)
(72) Inventor: LU, Qiang, Beijing 100028 (CN); XIAO, Zhaohao, Beijing 100028 (CN)
(74) Representative: Grünecker Patent- und Rechtsanwälte PartG mbB
(86) International application number: PCT/CN2024/108301
(87) International publication number: WO 2026/025247

(57) **Abstract**

According to embodiments of the present disclosure, there is provided a method, an apparatus, a device and a storage medium for interaction. The method comprises: presenting an interactive interface, wherein the interactive interface comprises at least one first interactive object; in response to detecting a selection of a first interactive object in the at least one first interactive object, presenting the selected first interactive object, the prompt information and model parameter associated with the selected first interactive object in the interactive interface; in response to detecting a sending instruction for the selected first interactive object, sending the multimedia content, the prompt information and the model parameter associated with the selected first interactive object to the target machine learning model; and in response to receiving an execution result for the target task from the target machine learning model, presenting the execution result in the interactive interface. Thereby, a user can intuitively know the capability of the machine learning model at a relatively low operation cost.

## Description

### FIELD

Example embodiments of the present disclosure generally relate to the field of computer, and in particular, to a method, an apparatus, a device, and a computer-readable storage medium for interaction.

### BACKGROUND

Evaluation of a machine learning model, for example, evaluation of a multimedia content understanding capability of the machine learning model needs a user to upload the multimedia content by herself/himself, and meanwhile, also needs the user to specify prompt information and various model parameters. Because prompt information and model parameters play an important role in the understanding capability of a model, unreasonable settings of prompt information and/or model parameter may directly affect the parsing effect of a machine learning model. This will make it difficult for a user to evaluate the understanding capability of a machine learning model; besides, setting prompt information and model parameters will also increase complexity and cost of user's operation.

### SUMMARY

In a first aspect of the present disclosure, a method for interaction is provided. The method comprises: presenting an interactive interface, wherein the interactive interface comprises at least one first interactive object, the at least one first interactive object is respectively associated with a multimedia content, prompt information and a model parameter, the prompt information is configured to describe a target task that needs to be executed on the multimedia content by a target machine learning model, and the model parameter indicates a parameter used by the target machine learning model for executing the target task; in response to detecting a selection of a first interactive object in the at least one first interactive object, presenting the selected first interactive object, the model parameter and the prompt information associated with the selected first interactive object in the interactive interface; in response to detecting a sending instruction for the selected first interactive object, sending the multimedia content, the prompt information and the model parameter associated with the selected first interactive object to the target machine learning model; and in response to receiving an execution result for the target task from the target machine learning model, presenting the execution result in the interactive interface.

In a second aspect of the present disclosure, an apparatus for interaction is provided. The apparatus comprises: a first presenting module, configured to present an interactive interface, wherein the interactive interface comprises at least one first interactive object, the at least one first interactive object is respectively associated with a multimedia content, prompt information, and a model parameter, the prompt information is configured to describe a target task that needs to be executed on the multimedia content by a target machine learning model, and the model parameter indicates a parameter used by the target machine learning model in executing the target task; a second presenting module, configured to, in response to detecting a selection of a first interactive object in the at least one first interactive object, present the selected first interactive object, the model parameter and the prompt information associated with the selected first interactive object in the interactive interface; an information sending module, configured to, in response to detecting a sending instruction for the selected first interactive object, send the multimedia content, the prompt information, and the model parameter associated with the selected first interactive object to the target machine learning model; and a third presenting module, configured to, in response to receiving an execution result for the target task from the target machine learning model, present the execution result in the interactive interface.

In a third aspect of the present disclosure, an electronic device is provided. The apparatus comprises at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program thereon, the computer program being executable by a processor to implement the method of the first aspect.

In a fifth aspect of the present disclosure, a computer program product is provided. The computer program product comprises computer-executable instructions, wherein the computer-executable instructions, when executed by a processor, implement the method of the first aspect.

It should be understood that the content described in this summary section is not intended to limit essential features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description with reference to the accompanying drawings. In the drawings, the same or similar reference numerals refer to the same or similar elements, wherein:
FIG. 1 illustrates a schematic diagram of an example environment in which embodiments of the present disclosure can be implemented;
FIG. 2 illustrates a flowchart of a process for user interaction according to some embodiments of the present disclosure;
FIGS. 3A-3C illustrate schematic diagrams of example interfaces according to some embodiments of the present disclosure;
FIG. 4 illustrates a block diagram of an apparatus for user interaction according to some embodiments of the present disclosure; and
FIG. 5 illustrates a block diagram of a device capable of implementing a plurality of embodiments of the present disclosure.

### DETAILED DESCRIPTION

It can be understood that, before technical solutions disclosed in various embodiments of the present disclosure are used, the type, the usage scope, the usage scenario and the like of personal information involved in the present disclosures should be notified to the user in an appropriate manner and the user's authorization should be obtained according to relevant laws and regulations.

For example, in response to receiving an active request from a user, prompt information is sent to the user to explicitly prompt the user that the operation she/he requests to execute will need to acquire and use personal information of the user. Therefore, the user can autonomously select whether to provide the personal information to software or hardware, such as electronic device, application program, server storage medium or the like, that executes the operation of the technical solution of the present disclosure according to the prompt information.

As an optional but non-limiting implementation, in response to receiving an active request of the user, the manner of sending the prompt information to the user may be, for example, a pop-up window, in which the prompt information may be presented in text manner. In addition, the pop-up window may further carry a selection control for the user to select "agree" or "disagree" to provide personal information to the electronic device.

It may be understood that the foregoing process of notifying a user and obtaining the user's authorization is merely illustrative, and does not constitute a limitation on implementations of the present disclosure, and other manners that meet related laws and regulations may also be applied to implementations of the present disclosure.

It may be understood that data involved in the present technical solution (including but not limited to the data itself, acquisition or use of the data) should follow requirements of corresponding laws and regulations and related stipulations.

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for example purposes only and are not intended to limit the scope of the present disclosure.

It should be noted that the title of any section/subsection provided herein is not limiting. Various embodiments are described throughout the document and any type of embodiments may be included in any section/subsection. Furthermore, embodiments described in any section/subsection may be combined in any manner with any other embodiment described in the same section/subsection and/or different sections/subsections.

Herein, unless explicitly stated, performing one step "in response to A" does not imply that the step is performed immediately after "A", but may include one or more intermediate steps.

In the description of embodiments of the present disclosure, term "include" and the like should be interpreted as an open-ended include, i.e., "include but not limited to". Term "based on" should be interpreted as "based at least in part on". Term "one embodiment" or "the embodiment" should be interpreted as "at least one embodiment". Term "some embodiments" should be interpreted as "at least some embodiments". Other explicit and implicit definitions may also be included below. Terms "first", "second" and the like may refer to different or identical objects. Other explicit and implicit definitions may also be included below.

As used herein, term "model" may learn associations between respective inputs and outputs from training data such that a corresponding output may be generated for a given input after training is finished. Generation of a model may be based on machine learning techniques. Deep learning is a machine learning algorithm that processes an input and provides a corresponding output by using a plurality of layers of processing units. "Model" may also be referred to as a "machine learning model," "machine learning network," or "network", which terms are used interchangeably herein. A model may further include different types of processing units or networks.

As mentioned briefly above, evaluation of a machine learning model, such as evaluation of an understanding capability of a multimedia content of the machine learning model requires the user to upload the multimedia content by himself/herself, while also requiring the user to specify prompt information and various model parameters. When uploading a multimedia content, a user needs to execute operations on the multimedia content such as editing etc., resulting in complexity and cost of user operation. In addition, because the prompt information and the model parameters play a vital role in the understanding capability of the model, unreasonable settings of prompt information and/or the model parameter may directly affect the parsing effect of the machine learning model. If a user does not have a certain professional knowledge, the specified prompt information or model parameter will be unreasonable, which may directly affect the understanding of a multimedia content by the machine learning model, thereby making it difficult for the user to evaluate the understanding capability of the machine learning model, and setting prompt information and model parameter also increases complexity and cost of user operation.

Embodiments of the present disclosure provide a solution for interaction. According to various embodiments of the present disclosure, an interactive interface including at least one first interactive object is presented, and the at least one first interactive object is respectively associated with a multimedia content, prompt information, and a model parameter; in response to detecting a selection of a first interactive object in the at least one first interactive object, the selected first interactive object, the model parameter and the prompt information associated with the selected first interactive object are presented in the interactive interface; in response to detecting a sending instruction for the selected first interactive object, the multimedia content, the prompt information, and the model parameter associated with the selected first interactive object are sent to the target machine learning model; and in response to receiving an execution result for the target task from the target machine learning model, the execution result is presented in the interactive interface. In this way, when evaluating the understanding capability of a certain machine learning model for a multimedia content, the user only needs to select the corresponding multimedia content and confirm the sending, so that the multimedia content, the prompt information and the model parameter associated with the multimedia content can be sent to the target machine learning model, and an execution result of the target machine learning model can be returned to the user. Thereby, the user can intuitively know the capability of the machine learning model at a relatively low operation cost.

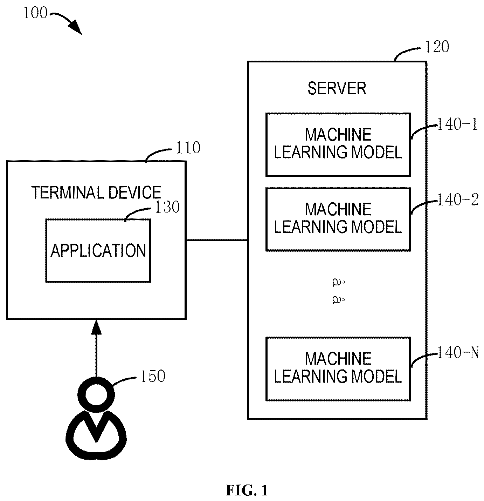

FIG. 1 illustrates a schematic diagram of an example environment 100 in which embodiments of the present disclosure can be implemented. In the environment 100, the terminal device 110 is deployed with an application 130 for evaluating a machine learning model, such as a web application or another types of application. In some embodiments, the application 130 is provided to assist a user in various types of task processing requirements under different applications, scenarios (e.g., evaluating the understanding capability of the machine learning model for a multimedia content). During an interaction with the application 130, the user enters an interaction message and the application 130 provides a reply message in response to the user input. Generally, the application 130 can support users to enter a question in a natural language and execute tasks and provide replies based on understanding and logical reasoning capability of natural language input.

In some embodiments, the application 130 may interact with a terminal user 150 as a contact thereof. For example, the application 130 may be implemented in an instant messaging (IM) application. The application 130 may interact with the terminal user 150 in a single chat session with the terminal user 150. In some embodiments, the application 130 may interact with a plurality of users in a group chat session that includes a plurality of users.

In some embodiments, the interaction message with the application 130 may include messages of a plurality of modalities, such as a text message (e.g., natural language text), a voice message, an image message, a video message, or the like.

In the environment 100, machine learning models 140-1, 140-2, ···, 140-N are deployed in a server 120. Machine learning models 140-1, 140-2, ···, 140-N may be referred to collectively or individually as a machine learning model 140 for ease of discussion.

In some embodiments, the machine learning model 140 may be, for example, a model for processing image data, or may be a model for processing video data.

In some embodiments, the terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination thereof, including accessories and peripherals of these devices, or any combination thereof. In some embodiments, a client device can also support any type of interface for a user (such as a "wearable" circuit, etc.).

In some embodiments, the server 120 may be a standalone physical server, may be a distributed system or a server cluster composed of a plurality of physical servers, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms, etc. The server 120 may include, for example, a computing system/server, such as a mainframe, an edge computing node, a computing device in a cloud environment, or the like.

A communication connection may be established between the server 120 and the terminal device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this aspect. In an embodiment of the present disclosure, the server 120 and the terminal device 110 may implement signaling interaction by using a communication connection therebetween.

It should be understood that the structure and function of the environment 100 is described for example purposes only and does not imply any limitation to the scope of the present disclosure.

Embodiments of the present disclosure will be described in detail below with reference to the accompanying drawings.

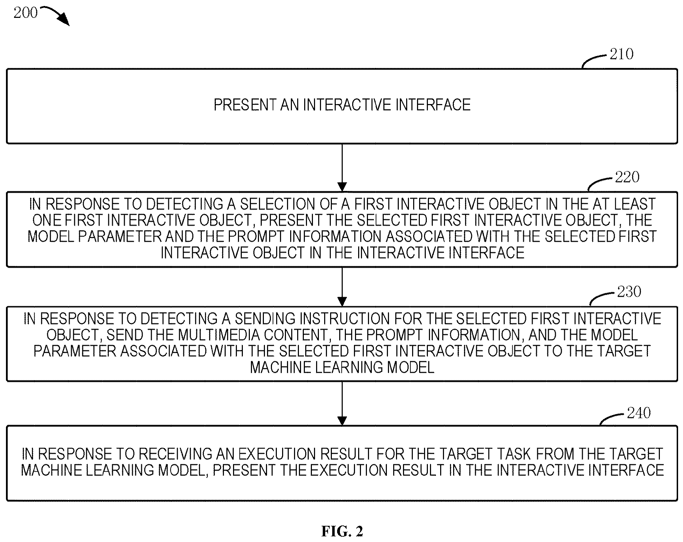

FIG. 2 illustrates a flowchart of a process 200 for interaction according to some embodiments of the present disclosure. Description will be made below by taking a terminal device executing an interaction process 200 as an example. Next, a solution for interaction provided by the present disclosure will be described in detail with reference to FIG. 1.

At block 210, the application 130 in the terminal device 110 presents an interactive interface.

The interactive interface includes at least one first interactive object, and the at least one first interactive object is respectively associated with a multimedia content, prompt information, and a model parameter. The prompt information is configured to describe a target task that needs to be executed on the multimedia content by a target machine learning model. The model parameter indicates a parameter used by the target machine learning model for executing the target task.

In some embodiments, the multimedia content, the prompt information, and the model parameter associated with the first interactive object may be stored locally to the terminal device 110. In some embodiments, the multimedia content, the prompt information, and the model parameter associated with the first interactive object may be stored in the server 120.

Herein, an "interactive object" refers to an element, component, or the like intractable by a user in an interactive interface. In some embodiments, the first interactive object may include, for example, a picture, an icon, a card, an identifier, and the like for displaying the multimedia content corresponding to the first interactive object. The specific presentation manner of the first interactive object is not limited in the embodiments of the present disclosure.

In some embodiments, the multimedia content may include, but is not limited to, audio, video, image, or the like. For example, the multimedia content is a video, and the prompt information corresponding to the video may be for example "details describing the video", and accordingly, the target task is to analyze the video by using a corresponding machine learning model (for example, a video understanding model) to "describe details in the video". As another example, the multimedia content is an image, and the prompt information corresponding to the image may be for example "describing a content in the image", and accordingly, the target task is to analyze the image by using a corresponding machine learning model (for example, an image recognition model) to "describe a content in the image".

It should be understood that examples of machine learning model and the task thereof presented herein are for purposes of illustration only. Embodiments of the present disclosure may be applied to capability evaluation of various types of machine learning models involving multimedia content processing.

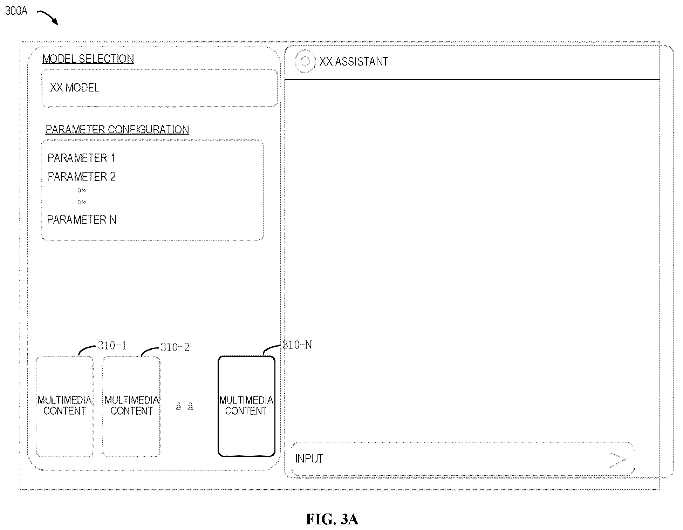

For example, a first interactive object being a picture showing a multimedia content is taken as an example. As shown in FIG. 3A, pictures 130-1, 130-2, ···, 130-N in an interface 300A that can be presented by the terminal device 110. For ease of discussion, pictures 130-1, 130-2, ···, 130-N may be collectively or individually referred to as picture 130.

In the interface 300A, picture 130 is configured to be selectable. As an example, a selection button may be presented on the picture 310. After picture 130 is selected as shown in the figure, for example, the border of picture 130 may be shown in bold.

At block 220, in response to detecting a selection of a first interactive object in the at least one first interactive object, the terminal device 110 presents the selected first interactive object, prompt information and a model parameter associated with the selected first interactive object in the interactive interface.

In some embodiments, in response to detecting a selection of a first interactive object in the at least one first interactive object, the terminal device 110 may obtain from the terminal device 110 locally or from the server 120 a multimedia content, prompt information, and a model parameter associated with the selected first interactive object.

After obtaining the multimedia content, the prompt information and the model parameter associated with the selected first interactive object, the terminal device 110 may present the selected first interactive object, the prompt information and the model parameter associated with the selected first interactive object in the interactive interface.

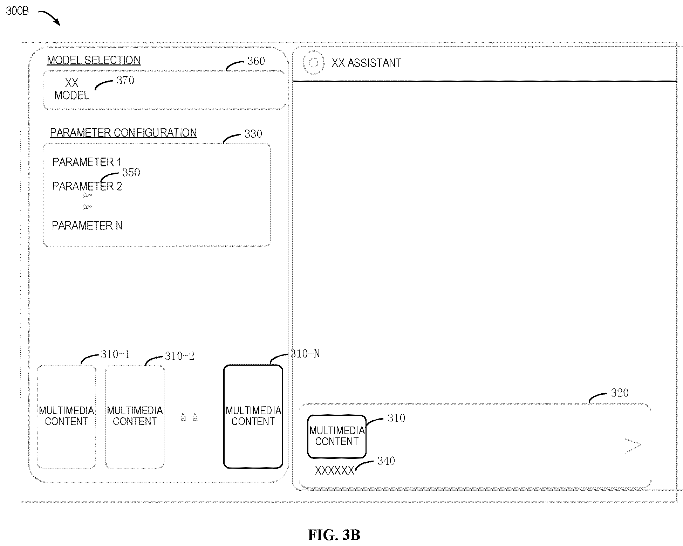

As shown in FIG. 3B, an input region 320 and a parameter configuration region 330 are presented in an interface 300B. After the terminal device 110 detects that a first interactive object is selected, the selected first interactive object and the prompt information 340 corresponding to the selected first interactive object may be presented in the input region 320, and the model parameter 350 corresponding to the selected first interactive object is presented in a parameter configuration region 330.

It should be understood that the selected first interactive object and the prompt information 340 corresponding to the selected first interactive object presented in the input region 320 may be presented in any suitable manner, and the model parameter 350 corresponding to the selected first interactive object presented in the parameter configuration region 330 may also be presented in any suitable manner, which is not limited in embodiments of the present disclosure.

In some embodiments, when the first interactive object is presented in the input region 320, the selected picture 130 may be directly presented, or another icon, text, or the like capable of indicating the selected picture 130 may be presented. Embodiments of the present disclosure are not limited.

In some embodiments, the prompt information presented in the interactive interface may be edited. With continued reference to FIG. 3B, the prompt information 340 presented in the input region 320 may be, for example, default prompt information, that is, the prompt information obtained by the terminal device 110, and the terminal user 150 may edit the prompt information in the input region 320 according to actual requirements.

In some embodiments, in response to detecting that the prompt information 340 in the input region 320 is edited, the terminal device 110 may present the edited prompt information in the interface 300B. As an example, the terminal device 110 may present an editing process of the terminal user 150 in the process of editing the prompt information by the user; or may present a final edited result after the user editing process is finished.

In some embodiments, a model parameter in the interactive interface may be edited. With continued reference to FIG. 3B, a model parameter 350 presented in the parameter configuration region 330 may be, for example, a default model parameter, that is, a model parameter obtained by the terminal device 110, and the terminal user 150 may edit the model parameter in the parameter configuration region 330 according to actual requirements.

In some embodiments, in response to detecting that the model parameter 350 in the parameter configuration region 330 is edited, the terminal device 110 may present the edited model parameter in the interface 300B.

In some embodiments, the model parameter may include, for example, at least one of the following: a sampling parameter, a text length of an execution result, the frame number of picture frames in acquired multimedia content, a resolution for acquiring multimedia content, a frame rate for acquiring multimedia content, a manner for acquiring picture frames in multimedia content, or a region for acquiring multimedia content.

The sampling parameter may indicate the randomness of acquiring a picture frame in the multimedia content by the machine learning model, for example, the higher the sampling parameter, the more randomly the machine learning model acquires a picture frame in the multimedia content; otherwise, less randomly the machine learning model acquires a picture frame in the multimedia content. The text length of an execution result may indicate a maximum length of the text output by the machine learning model. The frame number of picture frames in acquired multimedia content may indicate the frame number of picture frames acquired from the multimedia content. A manner for acquiring picture frames in the multimedia content may indicate, for example, a manner for acquiring a picture frame, for example, uniformly acquiring picture frames, or acquiring one or more key frames. The region for acquiring the multimedia content may include, for example, acquiring a predetermined shape of region from a picture frame of the multimedia content, generating a predetermined shape for a picture frame of the acquired multimedia content, or filling a black edge of the picture frame to form a predetermined shape.

At block 230, in response to detecting a sending instruction for the selected first interactive object, the terminal device 110 sends the multimedia content, the prompt information, and the model parameter associated with the selected first interactive object to the target machine learning model.

Before sending the multimedia content, the prompt information, and the model parameter associated with the selected first interactive object to the target machine learning model, the target machine learning model needs to be determined.

In some embodiments, the interactive interface presented by the terminal device 110 further includes a second interactive object, and the second interactive object indicates at least one machine learning model. In response to detecting a selection of a machine learning model in the at least one machine learning model, the terminal device 110 determines the selected machine learning model as the target machine learning model. In some embodiments, the second interactive object may be the name of a machine learning model.

In some embodiments, the terminal device 110 may send the determined identifier or name of the target machine learning model to the server 120, so that the server 120 determines the target machine learning model from a plurality of machine learning models.

With continued reference to FIG. 3B, a model selection region 360 is presented in the interface 300B, and the name 370 of the selected machine learning model is presented in the model selection region 360. As an example, the name of the machine learning model 370 may be presented in a drop-down menu, that is, upon the terminal user 150's click on the model selection region 360, a drop-down menu may be popped up, in which a plurality of machine learning models may be presented, and when selecting any machine learning model, the terminal user 150 may present the name 370 of a corresponding machine learning model in the model selection region 360.

After determining the target machine learning model, the terminal user 150 may click a sending button 325, so that the terminal device 110 may send the multimedia content, the prompt information, and the model parameter associated with the selected first interactive object to the server 120 for the server 120 to send them to the target machine learning model to execute the target task. The server 120 may send an execution result to the terminal device 110 after the target task executed by the target machine learning model is finished.

At block 240, in response to receiving an execution result for the target task from the target machine learning model, the terminal device 110 presents the execution result in the interactive interface.

In some embodiments, the interactive interface includes an interaction window with the target machine learning model, and the terminal device 110 may present, in the interaction window, the selected first interactive object, the execution result and the prompt information associated with the selected first interactive object as the context of the interaction window.

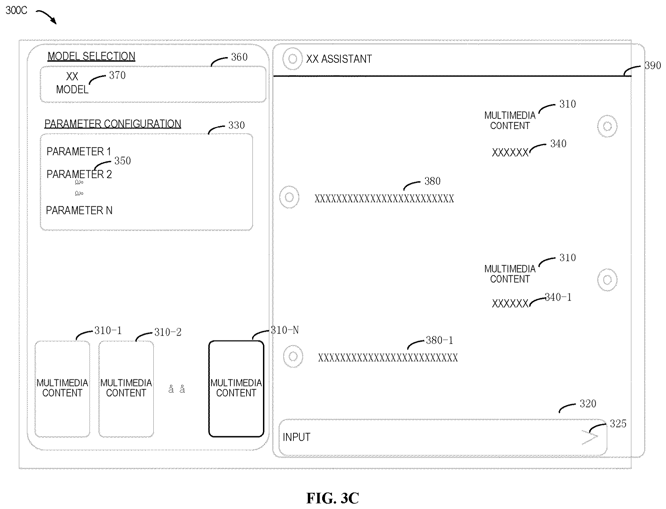

As shown in FIG. 3C, an input region 320 and an interaction window 390 are presented in an interface 300C, after the terminal user 150 clicks a send button 325, the first interactive object and the prompt information may be stopped to be presented in the input region 320, and the first interactive object and the prompt information are presented in the interaction window 390.

In response to receiving an execution result for the target task from the target machine learning model, the terminal device 110 may present an execution result 380 in the interaction window 390 as a context of the interaction window 390, to facilitate the user to observe the execution result output by the target machine learning model for the target task.

In the interaction window 390, the prompt information 340 is configured to be editable. After the terminal user 150 edits the prompt information 340, the send button 325 may be clicked again, so that the terminal device 110 sends the edited prompt information, the model parameter and the multimedia content associated with the selected first interactive object to the target machine learning model, or the terminal device sends only the edited prompt information to the target machine learning model for the machine learning model to execute the target task again based on the edited prompt information.

Similarly, after the target machine learning model returns an execution result, the model parameter 350 may also be edited. After the terminal user 150 edits the model parameter 350, the send button 325 may be clicked again, so that the terminal device 110 may send the multimedia content, the prompt information, and the edited model parameter associated with the selected first interactive object to the target machine learning model, or the terminal device sends only the edited model parameter to the target machine learning model for the machine learning model to execute the target task again based on the edited model parameter.

It should be understood that, after the target machine learning model returns an execution result, the prompt information 340 and the model parameter 350 may be separately edited or edited simultaneously.

With continued reference to FIG. 3C, after the terminal device 110 sends the multimedia content, the prompt information, and the model parameter associated with the selected first interactive object to the target machine learning model again, the terminal device 110 may present the first interactive object and the prompt information 340-1 that are sent again in the interaction window 390, and after returning the execution result, the target machine learning model presents the execution result 380-1 returned again in the interaction window as a new context in the interaction window 390.

In embodiments of the present disclosure, when the understanding capability of a certain machine learning model for the multimedia content is evaluated, in order for the multimedia content, the prompt information and the model parameter associated with the multimedia content to be sent to the target machine learning model and for an execution result of the target machine learning model to be returned to a user, the user only needs to select the corresponding multimedia content and confirm the sending, so that the user can intuitively know the capability of the machine learning model at a relatively small operation cost.

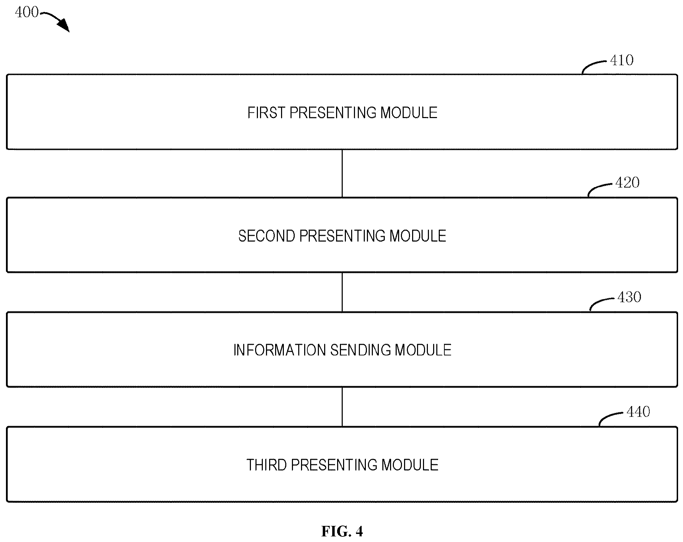

FIG. 4 illustrates a schematic structural block diagram of an apparatus 400 for interaction according to some embodiments of the present disclosure. The apparatus 400 may be implemented as or included in the terminal device 110. The various modules/components in the apparatus 400 may be implemented by hardware, software, firmware, or any combination thereof.

As shown in the figure, the apparatus 400 includes a first presenting module 410 configured to present an interactive interface, wherein the interactive interface includes at least one first interactive object, the at least one first interactive object is respectively associated with a multimedia content, prompt information, and a model parameter, the prompt information is configured to describe a target task that needs to be executed on the multimedia content by a target machine learning model, and the model parameter indicates a parameter used by the target machine learning model in executing the target task. The apparatus 400 further includes a second presenting module 420 configured to in response to detecting a selection of a first interactive object in the at least one first interactive object, present the selected first interactive object, the prompt information and the model parameter associated with the selected first interactive object in the interactive interface. The apparatus 400 further includes an information sending module 430 configured to, in response to detecting a sending instruction for the selected first interactive object, send the multimedia content, the prompt information, and the model parameter associated with the selected first interactive object to the target machine learning model. The apparatus 400 further includes a third presenting module 440 configured to, in response to receiving an execution result for the target task from the target machine learning model, present the execution result in the interactive interface.

In some embodiments, the interactive interface includes an interaction window with the target machine learning model, and presenting the execution result in the interactive interface includes: presenting, in the interaction window, the selected first interactive object, the execution result and the prompt information associated with the selected first interactive object as a context of the interaction window.

In some embodiments, the apparatus 400 further includes an obtaining module configured to obtain the multimedia content, the prompt information, and the model parameter associated with the selected first interactive object.

In some embodiments, the prompt information presented in the interactive interface is editable, and the apparatus 400 further includes a fourth presenting module configured to, in response to detecting that the prompt information is edited, present the edited prompt information in the interactive interface.

In some embodiments, the model parameter presented in the interactive interface is editable, and the apparatus 400 further includes a fifth presenting module configured to, in response to detecting that the model parameter is edited, present the edited model parameter in the interactive interface.

In some embodiments, the interactive interface further includes a second interactive object, and the second interactive object indicates at least one machine learning model.

In some embodiments, the apparatus 400 further includes a model determining module configured to, in response to detecting a selection of a machine learning model in the at least one machine learning model, determine the selected machine learning model as the target machine learning model.

In some embodiments, the model parameter includes at least one of the following: a sampling parameter, a text length of an execution result, the frame number of picture frames in acquired multimedia content, a resolution for acquiring the multimedia content, a frame rate for acquiring the multimedia content, a manner for acquiring picture frames in the multimedia content, or a region for acquiring the multimedia content.

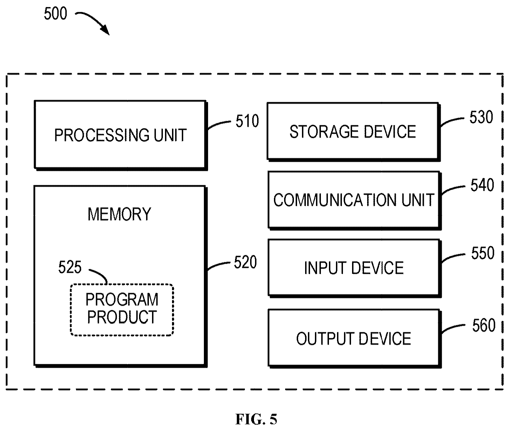

FIG. 5 illustrates a block diagram of an electronic device 500 in which one or more embodiments of the present disclosure may be implemented. It should be understood that the electronic device 500 illustrated in FIG. 5 is merely example and should not constitute any limitation on the function and scope of the embodiments described herein. The electronic device 500 illustrated in FIG. 5 may be configured to implement the terminal device 110 in FIG. 1.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In a multi-processor system, a plurality of processing units execute computer-executable instructions in parallel to improve parallel processing capability of electronic device 500.

The electronic device 500 typically includes a plurality of computer storage mediums. Such mediums may be any available medium accessible to the electronic device 500, including, but is not limited to, volatile and non-volatile medium, removable and non-removable medium. The memory 520 may be a volatile memory (e.g., register, cache, random access memory (RAM)), a non-volatile memory (e.g., read-only memory (ROM), electrically erasable programmable read-only memory (EEPROM), flash memory), or some combination thereof. The storage device 530 may be a removable or non-removable medium and may include a machine-readable medium, such as flash drive, magnetic disk, or any other medium which may be capable of storing information and/or data and may be accessed within the electronic device 500.

The electronic device 500 may further include additional removable/non-removable, volatile/non-volatile storage medium. Although not shown in FIG. 5, a disk drive for reading from or writing to a removable, non-volatile magnetic disk (e.g., a "soft disk") and an optical disk drive for reading from or writing to a removable, non-volatile optical disk may be provided. In these cases, each drive may be connected to a bus (not shown) by one or more data medium interfaces. The memory 520 may include a computer program product 525 having one or more program modules configured to perform various methods or actions of various embodiments of the present disclosure.

The communication unit 540 implements communication with another electronic device through a communication medium. Additionally, the functions of components of the electronic device 500 may be implemented in a single computing cluster or a plurality of computing machines capable of communicating over a communication connection. Thus, the electronic device 500 may operate in a networked environment using logical connections with one or more other servers, network personal computers (PCs), or another network node.

The input device 550 may be one or more input devices such as mouse, keyboard, trackball, or the like. The output device 560 may be one or more output devices, such as display, speaker, printer, or the like. The electronic device 500 may also communicate with one or more external devices (not shown) such as storage device, display device, etc. through the communication unit 540 as needed, communicate with one or more devices that enable a user to interact with the electronic device 500, or communicate with any device (e.g., a network card, a modem, etc.) that enables the electronic device 500 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Various aspects of the present disclosure are described herein with reference to flowchart(s) and/or block diagram(s) of methods, apparatuses, devices, and computer program products implemented in accordance with the present disclosure. It should be understood that each of the block(s) of the flowchart(s) and/or block diagram(s) and combination(s) of respective blocks in the flowchart(s) and/or block diagram(s) may be implemented by computer-readable program instructions.

These computer-readable program instructions may be provided to a processing unit of a general purpose computer, a special purpose computer, or another programmable data processing apparatus to produce a machine, such that the instructions, when executed by a processing unit of a computer or another programmable data processing apparatus, produce means to implement the functions/actions specified in one or more blocks of the flowchart(s) and/or block diagram(s). These computer-readable program instructions, which cause the computer, the programmable data processing apparatus and/or the other device to operate in a particular manner, may also be stored in a computer-readable storage medium, such that the computer-readable medium storing instructions includes a manufactured article including instructions to implement various aspects of the functions/actions specified in one or more blocks of the flowchart(s) and/or block diagram(s).

The computer-readable program instructions may be loaded onto a computer, another programmable data processing apparatus, or another device, such that a series of operational steps are performed on the computer, the other programmable data processing apparatus, or the other device to produce a computer-implemented process, thereby enabling the instructions executed on the computer, the other programmable data processing apparatus, or the other device to implement the functions/actions specified in one or more blocks of the flowchart(s) and/or block diagram(s).

The flowchart(s) and block diagram(s) in the drawings show architecture(s), function(s), and operation(s) possibly implemented by system(s), method(s), and computer program product(s) according to a plurality of implementations of the present disclosure. In this regard, each block in the flowchart(s) or block diagram(s) may represent a module, a program segment, or a portion of instructions that includes one or more executable instructions for implementing specified logic function. In some alternative implementations, the functions noted in the blocks may also occur in a different order from that noted in the drawings. For example, two consecutive blocks may actually be performed substantially in parallel, or may sometimes be performed in a reverse order, depending on the functions involved. It is also noted that each block in the block diagram(s) and/or flowchart(s) as well as combination(s) of blocks in the block diagram(s) and/or flowchart(s) may be implemented with a dedicated hardware-based system that performs specified functions or actions, or may be implemented with a combination of dedicated hardware and computer instructions.

Various implementations of the present disclosure have been described above, which are example and not exhaustive, and the implementations disclosed are not limiting. Many modifications and variations will be apparent to those ordinary skilled in the art without departing from the scope and spirit of the various implementations illustrated. The selection of the terms used herein is intended to best explain the principles, practical applications, or improvements to techniques in the marketplace of respective implementations, or to enable other ordinary skilled in the art to understand respective implementations disclosed herein.

## Claims

1. A method for interaction, comprising:
presenting an interactive interface, wherein the interactive interface comprises at least one first interactive object, the at least one first interactive object is respectively associated with a multimedia content, prompt information, and a model parameter, the prompt information is configured to describe a target task that needs to be executed on the multimedia content by a target machine learning model, and the model parameter indicates a parameter used by the target machine learning model for executing the target task;
in response to detecting a selection of a first interactive object in the at least one first interactive object, presenting the selected first interactive object, the model parameter and the prompt information associated with the selected first interactive object in the interactive interface;
in response to detecting a sending instruction for the selected first interactive object, sending the multimedia content, the prompt information, and the model parameter associated with the selected first interactive object to the target machine learning model; and
in response to receiving an execution result for the target task from the target machine learning model, presenting the execution result in the interactive interface.

2. The method of claim 1, wherein the interactive interface comprises an interaction window for the target machine learning model, and presenting the execution result in the interactive interface comprises:
presenting, in the interaction window, the selected first interactive object, the prompt information associated with the selected first interactive object, and the execution result as a context of the interaction window.

3. The method of claim 1, wherein before presenting the selected first interactive object, the model parameter and the prompt information associated with the selected first interactive object, the method further comprises:
obtaining the multimedia content, the prompt information, and the model parameter associated with the selected first interactive object.

4. The method of claim 1, wherein the prompt information presented in the interactive interface is editable, and the method further comprises:
in response to detecting that the prompt information is edited, presenting the edited prompt information in the interactive interface.

5. The method of claim 1, wherein the model parameter presented in the interactive interface is editable, and the method further comprises:
in response to detecting that the model parameter is edited, presenting the edited model parameter in the interactive interface.

6. The method of claim 1, wherein the interactive interface further comprises a second interactive object indicating at least one machine learning model.

7. The method of claim 6, further comprising:
in response to detecting a selection of a machine learning model in the at least one machine learning model, determining the selected machine learning model as the target machine learning model.

8. The method of claim 1, wherein the model parameter comprises at least one of:
a sampling parameter,
a text length of an execution result,
the frame number of picture frames in acquired multimedia content,
a resolution for acquiring multimedia content,
a frame rate for acquiring multimedia content,
a manner for acquiring picture frames in multimedia content, or
a region for acquiring multimedia content.

9. An apparatus for interaction, comprising:
a first presenting module, configured to present an interactive interface, wherein the interactive interface comprises at least one first interactive object, the at least one first interactive object is respectively associated with a multimedia content, prompt information, and a model parameter, the prompt information is configured to describe a target task that needs to be executed on the multimedia content by a target machine learning model, and the model parameter indicates a parameter used by the target machine learning model for executing the target task;
a second presenting module, configured to, in response to detecting a selection of a first interactive object in the at least one first interactive object, present the selected first interactive object, the model parameter and the prompt information associated with the selected first interactive object in the interactive interface;
an information sending module, configured to, in response to detecting a sending instruction for the selected first interactive object, send the multimedia content, the prompt information, and the model parameter associated with the selected first interactive object to the target machine learning model; and
a third presenting module, configured to, in response to receiving an execution result for the target task from the target machine learning model, present the execution result in the interactive interface.

10. An electronic device, comprising:
at least one processing unit; and
at least one memory coupled to the at least one processing unit and storing instructions for execution by the at least one processing unit, wherein the instructions, when executed by the at least one processing unit, cause the electronic device to perform the method of any of claims 1-8.

11. A computer-readable storage medium having a computer program stored thereon, the computer program being executable by a processor to implement the method of any of claims 1-8.

12. A computer program product comprising computer-executable instructions, wherein the computer-executable instructions, when executed by a processor, implement the method of any of claims 1-8.
